# EUROPÄISCHE PATENTSCHRIFT

(11) **EP 0 810 378 B1**
(45) Veröffentlichungstag und Bekanntmachung des Hinweises auf die Patenterteilung: **15.03.2000**
(21) Anmeldenummer: 97105202.2
(22) Anmeldetag: 27.03.1997
(51) Int. Cl.: F16B 13/14

(54) **Verbunddübel**
Compound plug
Cheville composite

(30) Priorität: 28.05.1996 DE 19621410
(43) Veröffentlichungstag der Anmeldung: 03.12.1997
(73) Patentinhaber: fischerwerke Artur Fischer GmbH & Co. KG, D-72178 Waldachtal (DE)
(72) Erfinder: Fischer, Artur, Prof.Dr.h.c. Dr.-Ing. E.h., 72178 Waldachtal (DE)

(56) Entgegenhaltungen:
- DE-A- 2 602 433
- DE-A- 2 702 591
- DE-A- 3 800 833
- DE-B- 2 723 729

## Beschreibung

Die vorliegende Erfindung betrifft einen Verbunddübel gemäß der Gattung des Anspruches 1.

Die Befestigung eines Befestigungselementes mittels Verbundmörtel oder dgl. ist insbesondere in porösem oder brüchigem Mauerwerk, Hohllochziegeln oder dgl. zweckmäßig, um auch hier hohe Haltekräfte zu erzielen. Ein solches Befestigungselement, das durch Einspritzen eines Verbundmörtels oder eines entsprechenden Verbundmittels fest im Mauerwerk verankerbar ist, ist aus der DE-C- 27 02 591 bekannt. Der Verbunddübel ist mit einem Schraubenkanal zur Aufnahme einer Befestigungsschraube und an seiner Außenfläche mit Sperrmitteln versehen. Ferner weist der Verbunddübel einen Schaft mit Austrittsöffnungen für in den Dübel einspritzbarem Verbundmörtel auf, wobei im Schraubenkanal zu den Austrittsöffnungen führende, den hinteren Teil des Schraubenkanals verschließende Leitflächen angeordnet sind. Diese Leitflächen leiten den einzuspritzenden Verbundmörtel auf von den Austrittsöffnungen bis zum hinteren Stirnende des Verbunddübels sich erstreckende Längsrinnen.

Mit diesem Verbunddübel wird eine Verankerung in porösem Mauerwerk bezweckt. Durch Einspritzen eines hochfesten Verbundmörtels ist der Dübel nach dem Aushärten des Mörtels in den Mörtelkern formschlüssig eingebunden. Eine Belastung des Dübels allerdings erst dann möglich, wenn der Verbundmörtel vollständig ausgehärtet ist. Dies kann in Abhängigkeit von der Art des Mörtels mehrere Stunden, unter Umständen gar Tage dauern. Daraus resultiert ein Montageablauf, bei dem zunächst der Verbunddübel verankert und zu einem späteren Zeitpunkt der Gegenstand befestigt wird.

In der DE 38 00 833 A1 wird daher ein Verbunddübel vorgeschlagen, der eine sofortige Montage des zu befestigenden Gegenstandes zuläßt und gleichzeitig die hohen Haltewerte eines Verbunddübels in porösem Material ermöglicht. Dies wird bei dem bekannten Verbunddübel dadurch erreicht, daß der Schraubenkanal zur Bildung eines durch die Befestigungsschraube aufweitbaren Spreizbereichs verengt ist, und daß die Dicke der Wandung am Grund der Längsrinnen so bemessen ist, daß ein ungehindertes Aufspreizen des Spreizdübels ermöglicht ist. Der Schraubenkanal erstreckt sich vom hinteren, einführseitigen Stirnende bis über einen Teil der Länge des Verbunddübels. Da nur dieser Bereich des Verbunddübels spreizbar ist, ist eine Gesamtlänge des Verbunddübels erforderlich, die beispielsweise bei einem Hohllochziegel die Erfassung mehrerer Querstege erlaubt. Der Länge des Verbunddübels entsprechend ist auch eine größere Menge an Verbundmörtel erforderlich. Beim Bohren der Bohrlöcher für den Verbunddübel in Hohllochziegeln ergeben sich insbesondere in den die Hohlkammern begrenzenden Querstegen Ausbrüche, die die Spreizwirkung des Verbunddübels reduzieren.

Der Erfindung liegt daher die Aufgabe zugrunde, einen Verbunddübel zu schaffen, bei dem die oben genannten Nachteile vermieden sind.

Die Lösung dieser Aufgabe wird durch die im Anspruch 1 angegebenen Merkmale erreicht. Durch die am vorderen Schaftbereich des Verbunddübels vorgesehene Längsschlitzung in Verbindung mit dem erweiterten Außendurchmesser ergibt sich ein Spreizbereich, der sich unmittelbar an die vordere, als Flansch ausgebildete Stirnseite des Verbunddübels anschließt. Damit erfolgt die Verspreizung und Verankerung des Dübels im Außensteg des Hohllochziegels, der eine größere Wandungsdicke aufweist als die innenliegenden Querstege. Da dieser Außensteg auch weniger zum Ausbrechen neigt, wird trotz verringerter Gesamtlänge des Verbunddübels ein bessere und mit dem Eindrehen der Befestigungsschraube einsetzende Spreizwirkung erzielt.

Das Eindrehen der Befestigungsschraube erfolgt nach dem Einspritzen des Verbundmörtels in den im Bohrloch des Mauerwerks eingesetzten Verbunddübel. Der Verbunddübel besitzt an seinem Schaft Austrittsöffnungen, die vom Schraubenkanal des Dübels seitlich nach außen führen. Über die von den Austrittsöffnungen bis zum einführseitigen, hinteren Stirnende des Verbunddübels sich erstreckenden Längsrinnen wird der Verbundmörtel über die gesamte Länge des Dübels verteilt. Nach dem Einspritzen des Verbundmörtels wird dann die Befestigungsschraube in den verengten Schraubenkanal eingedreht, wobei sich das Gewinde der Schraube in die Innenwandung des Schraubenkanals einschneidet. Im Bereich der Längsschlitzung des Verbunddübels erfolgt gleichzeitig eine Verspreizung des Dübels, die bereits vor dem Aushärten des Verbundmörtels eine Montage des zu befestigenden Gegenstandes ermöglicht. Nach dem Aushärten des Mörtels wird dann der Haltewert des Verbunddübels soweit gesteigert, daß die Zusatzbelastungen durch Nutzung des befestigten Gegenstandes und gegebenenfalls auch auftretende Überlastungen aufgenommen werden können.

Entspricht die Erweiterung des Außendurchmessers des vorderen Schaftbereiches etwa der lichten Weite der Längsschlitzung, läßt sich der Verbunddübel in diesem Bereich bis zum Aufeinanderliegen der Schlitzflächen zusammendrücken. Damit wird gleichzeitig auch der Schraubenkanal rechtwinklig zur Schlitzebene nochmals verengt, so daß sich eine optimale Spreizwirkung ergibt.

Um den Schraubenkanal von Verbundmörtel freizuhalten, kann dieser durch zu den Austrittsöffnungen führende Leitflächen verschließbar sein, die sich an einem Stöpsel befinden, der als Hohlkörper ausgebildet ist und mit den Austrittsöffnungen fluchtende Öffnungen aufweist. Nach dem Einspritzen des Verbundmörtels wird der Stöpsel entfernt und die Befestigungsschraube in den von Verbundmörtel freigehaltenen Schraubenkanal eingedreht.

Wird auf die Freihaltung des Schraubenkanals verzichtet, ist es zweckmäßig, entweder die Innenflächen des Schraubenkanals und / oder die Außenfläche der Befestigungsschraube mit einem Trennmittel zu versehen. Das Trennmittel verhindert eine Verklebung der Schraube im Verbunddübel, so daß jederzeit ein Ausdrehen der Schraube und damit eine Demontage des zu befestigenden Gegenstandes möglich ist.

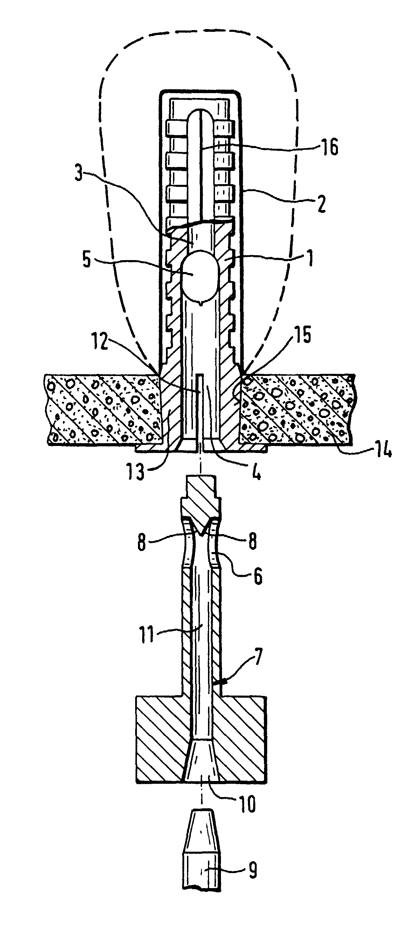

Die Erfindung wird nachfolgend anhand der Zeichnung näher erläutert.

Der Verbunddübel besteht aus einem Dübelschaft 1 und einem ihn teilweise umschließenden Gewebestrumpf 2. Der im Dübelschaft 1 verlaufende Schraubenkanal 3 ist in einen hinteren mit verengtem Durchmesser und in einen vorderen Bereich 4 mit einem erweiterten Durchmesser unterteilt. Allerdings ist auch der erweiterte Durchmesser des vorderen Bereichs 4 noch etwas geringer als der Außendurchmesser der Befestigungsschraube. Im Anschluß an den vorderen Bereich 4 des Schraubenkanals sind zwei sich gegenüberliegende Austrittsöffnungen 5 angeordnet, die mit Öffnungen 6 eines Stöpsels 7 fluchten, wenn dieser in den vorderen Bereich 4 eingesetzt ist.

Am Stöpsel 7 sind keilförmig angeordnete Leitflächen 8 ausgebildet, die zu den Öffnungen 5 des Verbunddübels hinführen. Wird nun bei eingesetztem Stöpsel 7 eine Spritzvorrichtung 9 an der Mündung 10 des Stöpsels 7 aufgesetzt, so kann durch den Kanal 11 des Stöpsels 7 der Verbundmörtel durch die Öffnungen 6 und die korrespondierenden Austrittsöffnungen 5 des Verbunddübels eingespritzt werden. Dabei wird der Gewebestrumpf 2 in der gestrichelt dargestellten Weise aufgedehnt. Nach Beendigung des Spritzvorganges wird der Stöpsel 7 entnommen und eine Befestigungsschraube in den Schraubenkanal 3, 4 eingeschraubt.

Durch die Einschlitzung 12 im vorderen, verdickten Schaftbereich 13 des Verbunddübels ist dieser Schaftbereich im Außensteg 14 eines Hohllochziegels aufspreizbar. Durch die Verdickung wird der Schaftbereich 13 beim Einschieben des Verbunddübels in das Bohrloch 15 des Hohllochziegels zusammengedrückt. Dadurch wird der Bereich 4 des Schraubenkanals 3 zusätzlich verengt, so daß sie beim Eindrehen der Befestigungsschraube eine ausreichende Spreizwirkung ergibt. Beim weiteren Eindrehen der Befestigungschaube in den hinteren, noch engeren Bereich des Schraubenkanals 3 weitet sich dieser Bereich des Dübelschaftes durch Aufreißen bzw. Dehnung entlang der Längsrinne 16 auf. Durch das Aufklappen des Verbunddübels entsteht somit nach dem Aushärten des Verbundmörtels ein Gegenlager, das an der Rückseite des Außenstegs 14 des Hohlkammerbausteines anstößt und hohe Haltekräfte ermöglicht.

Bei kleinen Dübelgrößen ist ein Einspritzen des Verbundmörtels auch ohne Stöpsel möglich. Das im Schraubenkanal 3, 4 nach dem Einspritzen des Verbundmörtels verbleibende Material wird beim Eindrehen der Befestigungsschraube durch die Austrittsöffnungen 5 bzw. nach vorne durch den Schraubenkanal 3 weitgehendst verdrängt. Um ein Verkleben der Schraube nach dem Aushärten des Verbundmörtels zu vermeiden und eine Demontage durch Ausschrauben der Schraube zu ermöglichen, ist es zweckmäßig, die Innenwandung des Schraubenkanals und / oder die Außenfläche der Befestigungsschraube mit einem Trennmittel beispielsweise Silikon, Teflon oder dgl. zu versehen.

## Patentansprüche

1. Verbunddübel mit an seiner Außenfläche angeordneten Sperrmitteln und einem Schraubenkanal zur Aufnahme einer den Dübel spreizenden Befestigungsschraube, sowie einem Schaft mit Austrittsöffnungen und von den Austrittsöffnungen bis zum einführseitigen, hinteren Stirnende des Verbunddübels sich erstreckenden Längsrinnen zur Verteilung des einzuspritzenden Verbundmörtels, **dadurch gekennzeichnet,** daß der Schaftbereich (13) von der vorderen, als Flansch ausgebildeten Stirnseite des Verbunddübels ausgehend eine Längsschlitzung (12) und mindestens über einen Teil seiner Länge einen erweiterten Außendurchmesser aufweist.

2. Verbunddübel nach Anspruch 1, **dadurch gekennzeichnet,** daß die Erweiterung des Außendurchmessers etwa der lichten Weite der Längsschlitzung (12) entspricht.

3. Verbunddübel nach Anspruch 1, **dadurch gekennzeichnet,** daß der Dübelschaft (1) von einem dehnbaren, engmaschigen Gewebestrumpf (2) überzogen ist.

4. Verbunddübel nach Anspruch 1, **dadurch gekennzeichnet,** daß der Schraubenkanal (3) durch zu den Austrittsöffnungen (5) führende Leitflächen (8) verschließbar ist, die sich an einem Stöpsel (7) befinden, der als Hohlkörper ausgebildet ist und mit den Austrittsöffnungen (5) fluchtende Öffnungen (6) aufweist.

5. Verbunddübel nach Anspruch 1, **dadurch gekennzeichnet**, daß die Innenfläche des Schraubenkanals (3, 4) und / oder die Außenfläche der Befestigungschraube mit einem Trennmittel versehen sind.

## Claims

1. Composite plug having locking means arranged on its external surface, a screw channel for accommodating a fastening screw, which expands the plug, and a shaft having outlet holes and longitudinal grooves extending from the outlet holes to the insertion-end, rear end face of the composite plug for distribution of the compound mortar to be injected, **characterized in that** the shaft region (13) has a longitudinal slit (12) starting from the forward end face of the composite plug, which end face is in the form of a flange, and an increased external diameter over at least part of its length.

2. Composite plug according to claim 1, **characterized in that** the increase in the external diameter is approximately the same as the inside width of the longitudinal slit (12).

3. Composite plug according to claim 1, **characterized in that** the plug shaft (1) is encased in an expansible, fine-meshed, woven sleeve (2).

4. Composite plug according to claim 1, **characterized in that** the screw channel (3) is capable of being closed off by means of guide surfaces (8) leading to the outlet holes (5), said guide surfaces being located on a stopper (7), which is in the form of a hollow body and which has holes (6) which align with the outlet holes (5).

5. Composite plug according to claim 1, **characterized in that** the internal surface of the screw channel (3,4) and/or the external surface of the fastening screw is/are provided with a parting agent.

## Revendications

1. Cheville composite comportant des moyens de verrouillage disposés sur sa surface extérieure et un canal pour vis pour recevoir une vis de fixation qui expanse la cheville, ainsi qu'un fût présentant des ouvertures de sortie et des rainures longitudinales, s'étendant depuis les ouvertures de sortie jusqu'à l'extrémité frontale arrière, située du côté introduction, de la cheville composite, pour répartir le mortier de liaison à injecter, caractérisée par le fait que, partant de la face frontale avant, formant un rebord, de la cheville composite, la zone (13) du fût présente une fente longitudinale (12) et, au moins sur une partie de sa longueur, un diamètre extérieur élargi.

2. Cheville composite selon la revendication 1, caractérisée par le fait que l'élargissement du diamètre extérieur correspond à peu près au passage libre de la fente longitudinale (12).

3. Cheville composite selon la revendication 1, caractérisée par le fait que le fût (1) de la cheville est revêtu d'un manchon tissé (2) dilatable, à maille serrée.

4. Cheville composite selon la revendication 1, caractérisée par le fait que le canal pour vis (3) peut être obturé par des surfaces déflectrices (8) qui guident vers les ouvertures de sortie (5) et se trouvent sur un bouchon (7) qui est conçu sous forme d'un corps creux et présente des ouvertures (6) alignées avec les ouvertures de sortie (5).

5. Cheville composite selon la revendication 1, caractérisée par le fait que la surface intérieure du canal pour vis (3, 4) et/ou la surface extérieure de la vis de fixation sont munies d'un agent de séparation.
